(19) **Europäisches Patentamt / European Patent Office / Office européen des brevets**

(11) **EP 2 475 732 B1**

(12) **FASCICULE DE BREVET EUROPEEN**

(45) Date de publication et mention
de la délivrance du brevet:
**16.05.2018 Bulletin 2018/20**

(21) Numéro de dépôt: **10762997.4**

(22) Date de dépôt: **20.08.2010**

(51) Int Cl.:
***C09K 5/04*** *(2006.01)*

(86) Numéro de dépôt international:
**PCT/FR2010/051745**

(87) Numéro de publication internationale:
**WO 2011/030031 (17.03.2011 Gazette 2011/11)**

(54) **COMPOSITIONS TERNAIRES POUR REFRIGERATION HAUTE CAPACITE**

TERNÄRE ZUSAMMENSETZUNGEN FÜR LEISTUNGSSTARKE KÜHLUNG

TERNARY COMPOSITIONS FOR HIGH-CAPACITY REFRIGERATION

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **11.09.2009 FR 0956248**

(43) Date de publication de la demande:
**18.07.2012 Bulletin 2012/29**

(73) Titulaire: **Arkema France
92700 Colombes (FR)**

(72) Inventeur: **RACHED, Wissam
F-69630 Chaponost (FR)**

(74) Mandataire: **Dang, Doris et al
ARKEMA France
Département Propriété Industrielle
420, rue d'Estienne d'Orves
92705 Colombes Cedex (FR)**

(56) Documents cités:
**WO-A2-2008/009923    WO-A2-2010/059677
FR-A1- 2 256 381      FR-A3- 2 182 956
US-A1- 2006 243 944   US-A1- 2008 314 073**

EP 2 475 732 B1

**Description**

La présente invention concerne l'utilisation de compositions renfermant du 2,3,3,3-tetrafluoropropène comme fluides de transfert de chaleur.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène pour les systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 enseigne l'ajout au tetrafluoropropène, de préférence le 1,3,3,3 tetrafluoropropène, d'un co-agent d'expansion tels que le difluoromethane, le pentafluoroéthane, le tetrafluoroéthane, le difluoroéthane, l'heptafluoropropane, l'hexafluoropropane, le pentafluoropropane, le pentafluorobutane, l'eau et le dioxyde de carbone.

Le document WO 2006/094303 divulgue des compositions binaires du 2,3,3,3 tetrafluoropropène (HFO-1234yf) avec du difluorométhane (HFC-32), et du 2,3,3,3 tetrafluoropropène avec du 1,1,1,2 tetrafluoroéthane (HFC-134a).

Des mélanges quaternaires comprenant du 1,1,1,2,3 pentafluoropropène (HFO-1225ye) en combinaison avec du difluorométhane, du 2,3,3,3 tetrafluoropropène et du HFC-134a ont été divulgués dans ce document. Cependant, le 1,1,1,2,3 pentafluoropropène est toxique.

Des mélanges quaternaires comprenant du 2,3,3,3 tetrafluoropropène en combinaison avec du iodotrifluorométhane ($CF_3I$), du HFC-32 et du HFC-134a ont également été divulgués dans le document WO 2006/094303. Toutefois, le $CF_3I$ possède un ODP non nul et pose des problèmes de stabilité et de corrosion.

Le document US2008/314073 décrit un système de transfert de chaleur comprenant un compresseur, un condenseur, un détendeur et un évaporateur et un dispositif à l'intérieur de la boucle fermée pour mesurer la pression interne du système. Il divulgue en outre, une méthode de détection de fuite des compositions de transfert de chaleur incluant, par exemple, des fluorooléfines dans un système de transfert de chaleur à boucle fermée.

Le document FR2182956 divulgue un échangeur de chaleur à contre-courant croisé comprenant un tube central muni à chacune de ses extrémités d'une bride et plusieurs tubes du plus faible diamètre enroulés sous forme hélicoïdale sur le tube central et qui se terminent dans des ouvertures d'entrée ou de passage des brides.

Le document FR2256381 divulgue un dispositif de transmission de chaleur comportant un compresseur, un condenseur et un évaporateur branchés en circuit fermé dans lequel circule un fluide de transfert de chaleur. Ce document décrit que le dispositif comprend en outre un échangeur de chaleur et une soupape d'étranglement disposés en série dans la partie du circuit situé entre le condenseur et l'évaporateur.

Le document WO2008/009923 divulgue une composition de transfert thermique comprenant un isomère de pentafluoropropène, un hydrofluorocarbone choisi parmi le difluorométhane, le fluoroéthane et le difluoroéthane et au moins un frigorigène supplémentaire.

Le document WO2010/059677 concerne des compositions comprenant un tétrafluoropropène et au moins un autre constituant utilisable en réfrigération, climatisation et les systèmes de pompe à chaleur.

La demanderesse propose l'utilisation de compositions renfermant du 2,3,3,3-tetrafluoropropène ne présentant pas les inconvénients précités et ayant à la fois un ODP nul et un GWP inférieur à celui des fluides de transfert de chaleur existants comme le R-410A (mélange binaire du pentafluoroéthane (50 % en poids) et du HFC-32 (50 % en poids)).

Les compositions utilisées comme fluides de transfert de chaleur dans la présente invention ont une température critique supérieure à 87°C (Température critique du R-410A est de 70,5°C). Ces compositions peuvent être utilisées dans les pompes à chaleur pour fournir de la chaleur à des températures jusqu'au 65°C mais aussi à des températures plus élevées jusqu'à 87°C (domaine de température où le R-410A ne peut pas être utilisé).

Les compositions utilisées comme fluide de transfert de chaleur dans la présente invention ont des températures à la sortie du compresseur équivalente aux valeurs données par le R-410A. Les pressions au condenseur sont inférieures aux pressions du R-410A et les taux de compression sont également inférieurs. Ces compositions peuvent remplacer le R-410A sans changer la technologie des compresseurs.

Les compositions utilisées comme fluides de transfert de chaleur dans la présente invention ont des masses volumiques à la saturation vapeur inférieures à la masse volumique saturée vapeur du R410A. Les capacités volumétriques données par ces compositions sont équivalentes à la capacité volumétrique du R-410A (entre 90 et 99%). Grâce à ces propriétés, ces compositions peuvent fonctionner avec des diamètres de canalisations inférieurs et donc moins de perte de charge dans les tuyauteries vapeur, ce qui augmente les performances des installations.

Les compositions selon la présente invention sont caractérisées en ce qu'elles contiennent essentiellement de 15 à 50 % en poids du 2,3,3,3 tetrafluoropropène, de 5 à 40 % en poids du HFC-134a et de 45 à 60 % en poids, de préférence de 45 à 50 % en poids du HFC-32.

Les compositions selon la présente invention peuvent être utilisées comme fluides de transfert de chaleur, dans les systèmes à compression et avec des échangeurs opérant en mode contre-courant ou mode croisé à tendance contre-courant. Elles conviennent particulièrement pour les systèmes de réfrigération à haute capacité par unité de volume balayé du compresseur.

Dans les systèmes à compression, l'échange thermique entre le fluide frigorigène et les sources de chaleur s'effectue par l'intermédiaire des fluides caloporteurs. Ces fluides caloporteurs sont à l'état gazeux (l'air dans l'air conditionné et la réfrigération à détente directe), liquide (l'eau dans les pompes à chaleur domestique, l'eau glycolée) ou diphasique.

Il existe différents modes de transfert :

- les deux fluides sont disposés parallèlement et vont dans le même sens : mode à co-courant (antiméthodique);
- les deux fluides sont disposés parallèlement mais vont dans le sens opposé: mode à contre-courant (méthodique);
- les deux fluides sont positionnés perpendiculairement : mode à courant croisé. Le courant croisé peut être à tendance co-courant ou contre-courant ;
- un des deux fluides fait un demi-tour dans un conduit plus large, que le deuxième fluide traverse. Cette configuration est comparable à un échangeur à co-courant sur la moitié de la longueur, et pour l'autre moitié à un échangeur à contre courant : mode à tête d'épingle .

Les compositions selon la présente invention sont avantageusement utilisées dans l'air conditionné stationnaire, de préférence en remplacement du R-410 A.

Les compositions selon la présente invention peuvent être stabilisées. Le stabilisant représente de préférence au plus 5 % en poids par rapport à la composition totale.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Les compositions selon la présente invention, en tant que fluides de transfert de chaleur, peuvent être mises en oeuvre en présence de lubrifiants tels que l'huile minérale, alkylbenzène, le polyalkylène glycol et le polyvinyl éther.

PARTIE EXPERIMENTALE

**Outils de calcul**

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont:
Température d'ébullition, Température et pression critique, la courbe de pression en fonction de la température à partir du point d'ébullition jusqu'au point critique, les densités liquide saturée et vapeur saturé en fonction de la température.

*HFC-32, HFC-134a:*

Les données sur ces produits sont publiées dans l'ASHRAE Handbook 2005 chapitre 20, et sont aussi disponibles sous Refrop (Logiciel développé par NIST pour le calcul des propriétés des fluides frigorigènes)

*HFO-1234yf:*

Les données de la courbe température-pression du HFO-1234yf sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

*Coefficient d'interaction des binaires*

L'équation RK-Soave utilise des coefficients d'interaction binaire pour représenter le comportement des produits en mélanges. Les coefficients sont calculés en fonction des données expérimentales d'équilibre liquide vapeur.
La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisé pour accélérer l'atteinte des équilibres. L'analyse des échantillons est effectuée par chromatographie (HP5890 seriesII) en phase gazeuse utilisant un catharomètre (TCD).

HFC-32 / HFO-1234yf, HFC-134a/HFO-1234yf:

Les mesures d'équilibre liquide vapeur sur le binaire HFC-32 / HFO-1234yf sont réalisées pour les isothermes suivantes : -10°C, 30°C et 70°C
Les mesures d'équilibre liquide vapeur sur le binaire HFC-134a / HFO-1234yf sont réalisées pour les isothermes suivantes : 20°C

HFC-32/HFO-134a:

Les données d'équilibre liquide vapeur pour le binaire HFC-134a / HFC-32 sont disponible sous Refprop. Deux isothermes (-20°C et 20°C) et une isobare (30bar) sont utilisées pour le calcul des coefficients d'interaction pour ce binaire.

**Système à compression**

Considérons un système à compression équipé d'un évaporateur et condenseur à contre-courant, d'un compresseur à vis et d'un détendeur.
Le système fonctionne avec 15°C de surchauffe et 5°C de sous refroidissement. L'écart de température minimum entre le fluide secondaire et le fluide frigorigène est considéré de l'ordre de 5°C.
Le rendement isentropique des compresseurs est fonction du taux de compression. Ce rendement est calculé suivant l'équation suivante:

$$\eta_{isen} = a - b(\tau - c)^2 - \frac{d}{\tau - e} \tag{1}$$

Pour un compresseur à vis, les constantes a, b, c, d et e de l'équation (1) du rendement isentropique sont calculées suivant les données types publiées dans le Handbook "Handbook of air conditioning and refrigeration, page 11.52".
Le %CAP est le pourcentage du rapport de la capacité volumique fournie par chaque produit sur la capacité du R-410A.
Le coefficient de performance (COP) et est défini, comme étant la puissance utile fournie par le système sur la puissance apportée ou consommée par le système.
Le coefficient de performance de Lorenz (COPLorenz) est un coefficient de performance de référence. Il est fonction de températures et est utilisé pour comparer les COP des différents fluides.
Le coefficient de performance de Lorenz est défini comme suit:
(Les températures T sont en K)

$$T_{moyenne}^{condenseur} = T_{entrée}^{condenseur} - T_{sortie}^{condenseur} \tag{2}$$

$$T_{moyenne}^{évaporateur} = T_{sortie}^{évaporateur} - T_{entrée}^{évaporateur} \qquad (3)$$

Le COP de Lorenz dans le cas de l'air conditionnée et réfrigération:

$$COPlorenz = \frac{T_{moyenne}^{évaporateur}}{T_{moyenne}^{condenseur} - T_{moyenne}^{évaporateur}} \qquad (4)$$

Le COP de Lorenz dans le cas de chauffage:

$$COPlorenz = \frac{T_{moyenne}^{condenseur}}{T_{moyenne}^{condenseur} - T_{moyenne}^{évaporateur}} \qquad (5)$$

Pour chaque composition, le coefficient de performance du cycle de Lorenz est calculé en fonction des températures correspondantes
Le %COP/COPLorenz est le rapport du COP du système par rapport au COP du cycle de Lorenz correspondant.

Résultats mode chauffage

En mode chauffage, le système à compression fonctionne entre une température d'entrée du fluide frigorigène à l'évaporateur de -5°C et une température d'entrée du fluide frigorigène au condenseur de 50°C. Le système fournit de la chaleur à 45°C.
Les performances des compositions selon l'invention dans les conditions de fonctionnement en mode chauffage sont données dans le Tableau 1. Les valeurs des constituants (HFO-1234yf, HFC-32, HFC-134a) pour chaque composition sont données en pourcentage en poids.

Tableau 1

| HFO-1234yf | HFC-32 | HFC-134a | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| R410A | | | -5 | 101 | 50 | 6,8 | 30,6 | 4,5 | 0,07 | 79,6 | 100 | 58,8 |
| 45 | 50 | 5 | -2 | 97 | 46 | 5,8 | 24,8 | 4,2 | 3,18 | 80,3 | 92 | 62,9 |
| 40 | 55 | 5 | -2 | 101 | 47 | 6,0 | 25,8 | 4,3 | 2,63 | 80,1 | 95 | 62,6 |
| 25 | 50 | 25 | -1 | 99 | 46 | 5,6 | 23,7 | 4,3 | 3,74 | 80,2 | 91 | 64,1 |
| 20 | 55 | 25 | -2 | 102 | 46 | 5,7 | 24,5 | 4,3 | 3,47 | 80,1 | 93 | 63,8 |
| 15 | 60 | 25 | -2 | 106 | 47 | 5,8 | 25,2 | 4,3 | 3,23 | 80,0 | 95 | 63,5 |

Résultats mode refroidissement ou air conditionnée

En mode refroidissement, le système à compression fonctionne entre une température d'entrée du fluide frigorigène à l'évaporateur de -5°C et une température d'entrée du fluide frigorigène au condenseur de 50°C. Le système fournit du froid à 0°C.

Les performances des compositions selon l'invention dans les conditions de fonctionnement en mode refroidissement sont données dans le Tableau 2. Les valeurs des constituants (HFO-1234yf, HFC-32, HFC-134a) pour chaque composition sont données en pourcentage en poids.

## Tableau 2

| HFO-1234yf | HFC-32 | HFC-134a | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| R410A | | | -5 | 101 | 50 | 6,8 | 30,6 | 4,5 | 0,07 | 79,6 | 100 | 50,4 |
| 50 | 45 | 5 | -1 | 94 | 45 | 5,7 | 23,7 | 4,2 | 3,76 | 80,5 | 92 | 55,5 |
| 45 | 50 | 5 | -2 | 97 | 46 | 5,8 | 24,8 | 4,2 | 3,18 | 80,3 | 95 | 55,1 |
| 40 | 55 | 5 | -2 | 101 | 47 | 6,0 | 25,8 | 4,3 | 2,63 | 80,1 | 98 | 54,8 |
| 30 | 45 | 25 | -1 | 96 | 46 | 5,4 | 22,9 | 4,2 | 4,04 | 80,3 | 92 | 56,7 |
| 25 | 50 | 25 | -1 | 99 | 46 | 5,6 | 23,7 | 4,3 | 3,74 | 80,2 | 94 | 56,4 |
| 20 | 55 | 25 | -2 | 102 | 46 | 5,7 | 24,5 | 4,3 | 3,47 | 80,1 | 97 | 56,2 |
| 15 | 60 | 25 | -2 | 106 | 47 | 5,8 | 25,2 | 4,3 | 3,23 | 80,0 | 99 | 55,9 |
| 15 | 45 | 40 | -1 | 98 | 45 | 5,2 | 22,1 | 4,3 | 4,48 | 80,2 | 90 | 57,3 |

## Revendications

**1.** Utilisation d'une composition contenant essentiellement de 15 à 50 % en poids du 2,3,3,3 tetrafluoropropène, de 5 à 40 % en poids du HFC-134a et de 45 à 60 % en poids du HFC-32, de préférence de 45 à 50% en poids du HFC-32, comme fluide de transfert de chaleur, dans des systèmes de réfrigération à compression avec des échangeurs en mode contre-courant ou en mode courant croisé à tendance contre-courant.

**2.** Utilisation selon la revendication 1 **caractérisée en ce que** la composition est stabilisée.

**3.** Utilisation selon la revendication 1 ou 2 **caractérisée en ce que** la composition est utilisé en remplacement du R-410A.

**4.** Utilisation selon l'une quelconque des revendications précédentes **caractérisée en ce que** la composition est mise en oeuvre en présence d'un lubrifiant.

## Patentansprüche

**1.** Verwendung einer Zusammensetzung, die im Wesentlichen 15 bis 50 Gew.-% 2,3,3,3-Tetrafluorpropen, 5 bis 40 Gew.-% H-FKW 134a und 45 bis 60 Gew.-% H-FKW 32, vorzugsweise 45 bis 50 Gew.-% H-FKW 32, enthält, als Wärmeübertragungsfluid in Kompressionskälteanlagen mit Austauschern im Gegenstrom-Modus oder im Querstrom-Modus mit Gegenstrom-Tendenz.

**2.** Verwendung nach Anspruch 1, **dadurch gekennzeichnet, dass** die Zusammensetzung stabilisiert ist.

**3.** Verwendung nach Anspruch 1 oder 2, **dadurch gekennzeichnet, dass** die Zusammensetzung als Ersatz für R-410A verwendet wird.

**4.** Verwendung nach einem der vorhergehenden Ansprüche, **dadurch gekennzeichnet, dass** die Zusammensetzung in Gegenwart eines Schmiermittels verwendet wird.

**Claims**

**1.** Use of a composition essentially containing from 15 to 50% by weight of 2,3,3,3-tetrafluoropropene, from 5 to 40% by weight of HFC-134a and from 45 to 60% by weight of HFC-32, preferably from 45 to 50% by weight of HFC-32, as heat-transfer fluid in compression refrigeration systems with exchangers in counterflow mode or in cross-flow mode with counterflow tendency.

**2.** Use according to Claim 1, **characterized in that** the composition is stabilized.

**3.** Use according to Claim 1 or 2, **characterized in that** the composition is used as a replacement for R-410A.

**4.** Use according to any one of the preceding claims, **characterized in that** the composition is employed in the presence of a lubricant.

**RÉFÉRENCES CITÉES DANS LA DESCRIPTION**

**Documents brevets cités dans la description**

- WO 2004037913 A
- WO 2005105947 A
- WO 2006094303 A
- US 2008314073 A
- FR 2182956
- FR 2256381
- WO 2008009923 A
- WO 2010059677 A

**Littérature non-brevet citée dans la description**

- ASHRAE Handbook. 2005